**Europäisches Patentamt**

**European Patent Office**

**Office européen des brevets**

(11) Veröffentlichungsnummer: **0 242 450**
**B1**

(12) # EUROPÄISCHE PATENTSCHRIFT

(45) Veröffentlichungstag der Patentschrift:
**17.11.88**

(51) Int. Cl.⁴: **B 29 C 67/22,** F 28 G 1/12,
B 08 B 9/04

(21) Anmeldenummer: **86200680.6**

(22) Anmeldetag: **22.04.86**

(54) Verfahren zum Herstellen offenporiger Reinigungskörper zur Innenreinigung der Rohre Wassergekühlter Röhrenwärmetauscher.

(43) Veröffentlichungstag der Anmeldung:
**28.10.87 Patentblatt 87/44**

(45) Bekanntmachung des Hinweises auf die Patenterteilung:
**17.11.88 Patentblatt 88/46**

(84) Benannte Vertragsstaaten:
**DE FR**

(56) Entgegenhaltungen:
**DE - A - 2 538 575**
**DE - A - 3 233 941**
**FR - A - 2 527 326**
**US - A - 2 642 626**

(73) Patentinhaber: **GEA Energietechnik GmbH & Co.,
Waldring 43, D-4630 Bochum 1 (DE)**

(72) Erfinder: **Der Erfinder hat auf seine Nennung verzichtet**

(74) Vertreter: **Ackmann, Günther, Dr.-Ing.,
Claubergstrasse 24 Postfach 10 09 22,
D-4100 Duisburg 1 (DE)**

## Beschreibung

Die Erfindung betrifft ein Verfahren zum Herstellen offenporiger, elastisch-verformbarer, insbesondere kugelförmiger Reinigungskörper zur Innenreinigung der Rohre wassergekühlter Röhrenwärmetauscher, bei dem die auf der Oberfläche vorgefertigter, aus Gummi oder Kunststoff bestehender Schaumstoffrohlinge vorhandene Haut durch Abrieb entfernt wird. Ein derartiges Verfahren ist aus der DE-A-32 33 941 bekannt.

Zur Innenreinigung der Rohre wassergekühlter Röhrenwärmetauscher o. dgl. werden in bekannter Weise kugelförmige Reinigungskörper aus Schaumgummi o. dgl., deren Durchmesser etwas über dem Innendurchmesser der Rohre liegt, in das Kühlwasser eingepumpt und durch die Rohre gedrückt. Nach Verlassen des Röhrenwärmetauschers werden diese aus dem Kühlwasser mittels einer Siebvorrichtung abgeschieden und im Kreislauf wieder dem dem Röhrenwärmetauscher zuströmenden Kühlwasser zugeleitet. Da die Reinigungskörper durch Abrieb einem Verschleiss ausgesetzt sind, müssen sie bei einer entsprechenden Verringung ihres Durchmessers aus dem Kreislauf entfernt und durch neue Reinigungskörper ersetzt werden. Reinigungskörper dieser Art sind entweder an ihrer Oberfläche offenporig, oder mit einem Abriebsteile enthaltenden Überzug versehen. Aus der DE-A-32 33 941 sind auch Reinigungskörper bekannt, bei denen eine Oberflächenhaut teilweise entfernt ist, so dass zwischen Inseln, Bändern o. dgl. offenporige Kanäle gebildet werden. Bei den offenporigen Reinigungskörpern sollen die Verunreinigungen auf ihrem Transportweg durch die Rohre von den äusseren Zellwänden abgerieben und von den offenen Poren aufgenommen werden.

Offenporige Reinigungskörper werden nach verschiedenen Methoden hergestellt. So ist es bekannt, die in der Regel kugelförmigen Reinigungskörper durch Fräsen oder Schleifen von Schwammgummi- oder Moosgummisträngen oder geschäumten Kunststoffsträngen herzustellen. Diese Herstellungsmethode ist jedoch sehr zeitaufwendig und teuer. Nach einer weiteren bekannten Methode werden kugelförmige Schaumstoffrohlingen aus Gummi (Schwammgummi oder Moosgummi) hergestellt, deren auf der Oberfläche vorhandene Haut in Korundhalbschalen abgeschliffen wird. Das Schleifen elastisch-verformbarer Schaumstoffkugeln ist jedoch schwierig, und diese Methode benötigt je nach Festigkeit des Werkstoffs lange Schleifzeiten von 1 bis 2 Minuten pro Kugel. Da die Durchmesserstreuung der geschliffenen Kugel bis zu 3 mm betragen kann, ist ein zusätzicher Sortiervorgang erforderlich. Ausserdem müssen die Kugeln vor oder nach dem Schleifen durch ein Walzwerk geführt werden, um die teilweise noch verschlossenen Poren aufzubrechen.

Ausgehend von diesem Stand der Technik liegt der Erfindung die Aufgabe zugrunde, die Poren bzw. Zellen der vorgefertigten Schaumstoffrohlinge auf besonders einfache und schnelle Weise zu öffnen.

Diese Aufgabe wird erfindungsgemäss dadurch gelöst, dass die Schaumstoffrohlinge einer Tiefkühlung ausgesetzt werden.

Durch die mit der Tiefkühlung verbundene Wärmedehnung des Gummis- oder Kunststoffwerkstoffs platzen die die äusseren Poren bzw. Zellen verschliessenden Häutchen auf. Ausserdem platzen aber auch im Innern des Schaumstoffkörpers vorhandene Häutchen bzw. Membranen auf, so dass ein wesentlich erhöhtes offenes Porenvolumen entsteht. Die Tiefkühlmethode erlaubt eine besonders preiswerte Massenfertigung. Dafür kann eine Vielzahl vorgefertigter Schaumstoffrohlinge in einen Kühlbehälter eingefüllt werden.

Um die Oberflächenhaut der Schaumstoffrohlinge besonders gleichmässig und vollständig zu entfernen, werden sie vorzugsweise in tiefgekühltem Zustand einer Abriebbehandlung ausgesetzt. Das kann beispielsweise dadurch geschehen, dass die Schaumstoffrohlinge in einer drehbaren Trommel tiefgekühlt und umgewälzt werden. Durch die Tiefkühlung haben die Schaumstoffrohlinge ihre elastische Verformbarkeit verloren. Die hart gewordenen Schaumstoffrohlinge werden beim Umwälzen und Fallen innerhalb der sich drehenden Trommel leicht enthäutet. Je nach dem Füllgrad der Trommel können mit einer Charge viele Tausend Reinigungskörper offenporig gemacht werden. Die Trommel erlaubt eine einfache und schnelle Kühlung der Schaumstoffrohlinge, die beim Umwälzen mit dem eingeleiteten Kühlmittel in Berührung kommen. Der Abriebeffekt erfolgt nebenbei und kann durch die Laufzeit der Trommel gesteuert werden.

Die Tiefkühlung der Schaumstoffrohlinge geschieht beispielsweise mit Flüssiggasen. Geeignet sind insbesondere Flüssiggase, die in der Gefriertechnik, d. h. beim Gefrieren von Lebensmitteln verwendet werden. Eine besonders gute Kühlung lässt sich mit flüssigem Stickstoff erzielen, der durch seine tiefe Siedetemperatur von 77° K (−196°) eine hohe Kälteleistung hat, so dass sehr kurze Abkühlzeiten erhalten werden. Geeignet ist aber auch verflüssigtes Kohlendioxid, das beim Einströmen in den Kühlbehälter bzw. die Trommel verdampft bzw. teilweise sublimiert. Schliesslich sind aber auch andere übliche Gefriermethoden geeignet, wobei ggf. die tiefgekühlten Schaumstoffrohlinge für die Abriebbehandlung in eine drehbare Trommel eingeführt werden.

Ist eine Abriebbehandlung in einer drehbaren Trommel vorgesehen, können auch besondere Abriebstoff aus Stahl, Kunststoff, Keramik, Holz o. dgl. zugegeben werden, oder die Trommel kann mit Ketten, Bürsten o. dgl. ausgerüstet sein, um den Abriebvorgang schonend oder aggressiv ausführen zu können.

In einem Versuch wurden 70 kg kugelförmige Schaumstoffrohlinge, d. h. etwa 25 000 Stück in eine etwa 400 l fassende Trommel eingefüllt, mit flüssigem Stickstoff auf etwa −130° C tiefgekühlt und 30 Minuten in der Trommel gewälzt. Die auf normale Raumtemperatur erwärmten Reinigungskörper waren vollständig enthäutet. Da die Abweichungen ihres Durchmessers unter 0,3 mm lag, war kein Sortieren erforderlich. Durch Vergleichsversuche konnte auch festgestellt werden, dass die Reinigungskörper schon nach einer stark verkürzten Behandlungszeit ein gleich gutes Wasseraufnahmevermögen besassen, wie die in Korundhalbschalen geschliffenen und mit einem Walzwerk aufgebrochenen Reinigungskörper.

**Patentansprüche**

1. Verfahren zum Herstellen offenporiger, elastisch-verformbarer, insbesondere kugelförmiger Reinigungskörper zur Innenreinigung der Rohre wassergekühlter Röhrenwärmetauscher, bei dem die auf der Oberfläche vorgefertigter, aus Gummi oder Kunststoff bestehender Schaumstoffrohlinge vorhandene Haut durch Abrieb entfernt wird, dadurch gekennzeichnet, dass die Schaumstoffrohlinge einer Tiefkühlung ausgesetzt werden.

2. Verfahren nach Anspruch 1, dadurch gekennzeichnet, dass die Schaumstoffrohlinge in tiefgekühltem Zustand der Abriebbehandlung ausgesetzt werden.

3. Verfahren nach Anspruch 2, dadurch gekennzeichnet, dass die Schaumstoffrohlinge in einer drehbaren Trommel tiefgekühlt und umgewälzt werden.

4. Verfahren nach einem der Ansprüche 1 bis 3, dadurch gekennzeichnet, dass die Schaumstoffrohlinge mit Flüssiggasen tiefgekühlt werden.

5. Verfahren nach Anspruch 4, dadurch gekennzeichnet, dass die Schaumstoffrohlinge mit flüssigem Stickstoff tiefgekühlt werden.

6. Verfahren nach Anspruch 4, dadurch gekennzeichnet, dass die Schaumstoffrohlinge mit flüssigem Kohlendioxid tiefgekühlt werden.

**Claims**

1. A method of making open-pored, elastically deformable and more particularly spherical cleaning members for the internal cleaning of the tubes of water-cooled tube heat-exchangers, in which the skin present on the surface of prefabricated foam material blanks consisting of rubber or plastics is removed by abrasion, characterised in that the foam blanks are subjected to deep-freezing.

2. A method according to claim 1, characterised in that the foam material blanks are subjected to the abrasion treatment in the deep-frozen state.

3. A method according to claim 2, characterised in that the foam material blanks are deep-frozen and revolved in a rotatable drum.

4. A method according to any of claims 1 to 3, characterised in that the foam material blanks are deep-frozen with liquid gases.

5. A method according to claim 4, characterised in that the foam material blanks are deep-frozen with liquid nitrogen.

6. A method according to claim 4, characterised in that the foam material blanks are deep-frozen with liquid carbon dioxide.

**Revendications**

1. Procédé de fabrication d'éléments de nettoyage à pores ouverts, déformables élastiquement, notamment sphériques, destinés à nettoyer l'intérieur des tubes d'échangeurs de chaleur tubulaires à refroidissement par de l'eau, qui consiste à éliminer par abrasion la peau présente à la surface d'ébauches de matières mousses préfabriquées en caoutchouc ou en matière plastique, caractérisé en ce qu'il consiste à soumettre les ébauches de matière mousse à un traitement par le froid, à une température très basse.

2. Procédé suivant la revendication 1, caractérisé en ce qu'il consiste à soumettre les ébauches en matière mousse au traitement d'abrasion, alors qu'elles sont à l'état refroidi à une température très basse.

3. Procédé suivant la revendication 2, caractérisé en ce qu'il consiste à refroidir, à une température très basse, les ébauches en matière mousse, dans un tambour tournant et à les faire rouler.

4. Procédé suivant l'une des revendications 1 à 3, caractérisé en ce qu'il consiste à refroidir les ébauches en matière mousse à une température très basse, par des gaz liquides.

6. Procédé suivant la revendication 4, caractérisé en ce qu'il consiste à refroidir les ébauches en matière mousse à une température très basse par de l'azote liquide.

6. Procédé suivant la revendication 4, caractérisé en ce qu'il consiste à refroidir les ébauches en matière mousse à une température très basse par du gaz carbonique liquide.